# EUROPEAN PATENT SPECIFICATION

(11) **EP 3 797 317 B1**
(45) Date of publication and mention of the grant of the patent: **23.03.2022**
(21) Application number: 18726974.1
(22) Date of filing: 23.05.2018
(51) Int. Cl.: G01S 17/93, G01S 7/481

(54) **SHORT WAVELENGTH INFRARED LIDAR**
INFRAROT-LIDAR MIT KURZER WELLENLÄNGE
LIDAR INFRAROUGE À COURTE LONGUEUR D'ONDE

(43) Date of publication of application: 31.03.2021
(73) Proprietor: IRIS Industries SA, 2024 Saint-Aubin-Sauges (CH)
(72) Inventor: MEYLAN, M. Claude, 2024 Saint-Aubin-Sauges (CH)
(74) Representative: Bovard SA Neuchâtel
(86) International application number: PCT/EP2018/063451
(87) International publication number: WO 2019/223858

(56) References cited:
- US-A1- 2009 224 154
- US-A1- 2011 121 159
- US-A1- 2018 081 060
- US-A1- 2018 128 922
- ZHENG JUN ET AL: "GeSn p-i-n photodetectors with GeSn layer grown by magnetron sputtering epitaxy", APPLIED PHYSICS LETTERS, A I P PUBLISHING LLC, US, vol. 108, no. 3, 18 January 2016 (2016-01-18), XP012204375, ISSN: 0003-6951, DOI: 10.1063/1.4940194 [retrieved on 1901-01-01]

## Description

### Technical Field

The invention relates to the field of light detection and ranging units (Lidars). More precisely the invention relates to Lidars operable in the short wavelength infrared. In particular the invention relates to Lidars comprising semiconductor light sources and detectors which emit and detect light in the short wavelength infrared portion of the electromagnetic spectrum. The invention also relates to Lidars having detection capabilities up to distances of at least 200 m including highly sensitive detectors that operate with relatively low power light sources providing an improved eye safety.

### Background of the art

Lidar, now often used as an acronym for light detection and ranging, utilize light for measuring the distance to remote objects. Typically, a Lidar system comprises a light source - that can be an array of illuminators - and a detector - as for example single detectors or arrays of single-photon avalanche diodes (SPAD) - to obtain and process reflections from a controllable field of view, wider than what is possible with a single illuminator. Most Lidar systems operate according to the time-of-flight (TOF) principle, which relies on the finite propagation speed of light. In the pulsed TOF technique, the light source emits a train of light pulses of very short duration. A part of the optical energy carried by each pulse is reflected via back-scattering an illuminated target to return back to the optical receiver of the Lidar. Knowing the velocity of light in the air, the distance that separates the target from the Lidar is inferred from the time taken by the light pulses to propagate up to the object and then back to the Lidar. This time delay is usually measured by an electronic counter combined with peak detection and threshold comparator circuitry.

The basic design of actual Lidar systems used in control and navigation for terrestrial vehicles revolves now around compact assemblies that typically comprise a laser diode transmitter emitting laser pulses at the higher end of the near-infrared electromagnetic spectrum, due to the wavelength detection cutoff of the Si-based CMOS detector. Unfortunately, exposure to laser light can cause significant damage to the eyes - typically in the form of burns and direct damage to the retina. It is also well known that lasers with wavelengths from 400 nm to around 1400 nm travel directly through the eye's lens, cornea and inter ocular fluid to reach the retina. When the laser energy is absorbed by the retina, it can cause permanent injury and blindness. Furthermore, the sensitivity of Si doesn't allow for an angular resolution below 0.2 degrees - sufficient to guide autonomous vehicles - and a sensing range of at least 200 m usually considered to be necessary for cars travelling at a speed of 120 km per hour.

Only a few companies have tried to take advantage of other absorption materials such as indium-gallium-arsenide (InGaAs) to meet that challenge. Their Lidar systems operate at a 1550 nm wavelength, just below the detection cutoff of this alloy. The biggest advantage with this wavelength is that it is not focused by the human eye. Laser wavelengths longer than 1400 nm are also strongly absorbed in the cornea and lens, thus lasers producing light in this range, below a certain power threshold, are considered essentially "retina safe" as damaging energy levels often do not reach the retina. Even if this higher wavelength allows for higher exposures - in terms of time and power - before there is any permanent damage to the eye, the cornea and lens absorb the laser energy, causing them to heat, possibly leading to damages or eventually be burnt at least partially. And while the outer surface of the cornea (the epithelium) can at least heal after damage, this is not the case for the inner part (the endothelium). Anyway, the amount of the heat, as well as potential damage, that can be very painful, depends not only on the wavelength, but also on the power, the total delivered energy, the beam divergence, the beam quality, and the length of exposure. Therefore, one cannot simply state a power or intensity limit for eye safety at a given wavelength. This is exactly what the standard specifies: the term "eye safe" should not be used to describe a laser based solely on an output wavelength greater than 1400 nm. Since no laser is completely eye safe, it is always advised to use extreme caution. In other words, switching to higher wavelengths for automotive Lidars is only part of the solution. Prior art document US 2018/081060 describes a 3D Imaging LIDAR with eyes safety.

### Summary of the invention

It is an objective of the invention to provide a Lidar solving the limitations of prior art Lidars, in particular related to eye safety limits and thus the needed optical power. Lidars of prior art mainly use InGaAs detectors. As the detector sensitivity is given by the absorption material in use, the invention proposes a Lidar comprising at least a novel detector to reduce the needed output power to reach a distance detection of at least 200 m. It is part of the present invention to explain how ranging distances and laser safety can be improved by use of a new type of detector and also a new type of an emitter-detector module. It is an additional objective of the invention to provide a compact Lidar comprising a novel compact emitter-detector module.

It is also part of the present invention to provide illumination beams below the maximum permission exposure (MPE) assuring that the Lidar of the invention meets the highest existing laser safety standards.

More precisely, the invention, as described in claim 1, is achieved by short wavelength infrared (SWIR) light detection and ranging (Lidar) unit comprising an emitter-detector module comprising a short wavelength infrared optical emitter and a short wavelength infrared detector, wherein:
- said emitter-detector module comprises a platform on which said optical emitter and said short wavelength infrared detector are arranged;
- said optical emitter comprises at least one semiconductor laser configured to emit a light beam having a wavelength in the short-wave infrared electromagnetic spectrum, defined between 1'000 nm and 3'000 nm, and configured to be operable in a pulsed mode so that, in operation, light pulses having a duration below 5 ns can be emitted;
- said short wavelength infrared Lidar comprising optical collimation means, configured to collimate said emitted light beam;
- the detector is configured for detecting, in operation of said Lidar at least a fraction of an optical reflected beam provided by an at least partial reflection of a target illuminated by said light beam; - The short wavelength infrared Lidar is configured to be operable to at least a distance of 200 m relative to said optical emitter, being eye-safe at all distances relative to said emitter-detector module;
- said detector comprising a readout wafer comprising a CMOS readout layer and a SWIR absorbing layer that is separated from said readout layer by a buffer layer said detector array comprising between said buffer layer and said readout layer a p-n junction;
- said detector comprises at least one avalanche photodiodes;
- said short wavelength infrared Lidar comprises light collection means configured to collect and direct said at least a fraction of the optical reflected beam to said detector;
- said detector comprises at least one absorber layer made of a GeSn alloy.

In embodiments the detector may be a detector comprising a single detecting element, defined also as detecting pixel, or may be an array of detecting elements or detecting pixels. The short wavelength infrared Lidar is configured to be operable to at least a distance of 200 m relative to said optical emitter, being eye-safe at all distances relative to said emitter-detector module.

In an embodiment said semiconductor laser comprises at least one layer made of a GeSn alloy.

In an example to understand the invention said semiconductor laser is an array of vertical-cavity surface-emitting lasers (VCSELs).

In an embodiment said absorbing layer is made of Ge₁₋ₓSnₓ.

In an embodiment said absorbing layer has a Sn content x which is higher than 0.03 and lower than 0.12.

In an example to understand the invention said absorbing layer is made of SiₓGe_{1-x-z}Sn_{z}.

In an example to understand the invention the Si content x is higher than 0.06 and lower than 0.2.

In an example to understand the invention the Sn content z is higher than 0.02 and lower than 0.1.

In an embodiment said p-n junction is situated at the interface of said buffer layer and said CMOS readout wafer.

In an example to understand the invention said p-n junction is situated to the side of said buffer layer.

In an example to understand the invention said p-n junction is situated to the side of said readout layer.

In an embodiment said p-n junction is situated to the side of said readout layer.

In an embodiment said buffer layer is made of Ge₁₋ₓSnₓ and having a Sn content x between 0.00 ≤ x ≤ 0.03.

In an embodiment said buffer layer is realized by sputter epitaxy.

In an example to understand the invention aid buffer layer is realized by reduced-pressure chemicalvapor deposition.

In an example to understand the invention said material constituting said absorbing layer is configured as a plurality of rods aligned substantially in a direction perpendicular to said buffer layer.

In an embodiment said absorbing layer is monolithically integrated to a readout wafer comprising said CMOS readout layer and wherein a recrystallized intermediate layer is situated at the interface of said absorber wafer and said CMOS readout layer.

In an embodiment said optical collimation means comprises a microlens array.

In an embodiment said optical emitter and said optical collimation means are configured to provide an emitted light beam having a first aperture between 10°-25°, and a second aperture between 25°-120°.

In an embodiment said emitter-detector module comprises electronic processing means to process the information provided by said detector.

In an example to understand the invention said optical emitter and said detector are integrated monolithically on said platform.

In an example to understand the invention said platform is made of Si.

In an example to understand the invention said platform is the substrate of the optical emitter.

In an example to understand the invention said platform is the substrate of said detector.

In an embodiment least one optical emitter is situated to each side of said detector, said side being defined in the plane of said detector.

In an example to understand the invention light emission side of said optical emitter is situated to the side of said detector opposite to said target, and wherein at least one optical waveguide, comprising at least one light output surface, is arranged to said optical emitter so that, in operation, at least one light beam is directed to said target from said at least one light output surface.

In an embodiment micromechanical means are provided to said platform so as to provide, in operation, of the short wavelength infrared Lidar, a scanning movement of said emitted light beam.

In an example to understand the invention said optical emitter and said optical collimation means are configured in an emitter housing and wherein said micromechanical means are arranged between said housing and said platform.

In an example to understand the invention said micromechanical means comprises an electromagnetic steering mechanism.

In an example to understand the invention said micromechanical means comprise at least one electrostatic actuator.

In an embodiment said platform comprises optical beam scanning means configured so that the optical axis of said emitted light beam and the optical axis of said light collecting means are parallel.

In an embodiment said platform comprises a micro structured light barrier separating optically said optical emitter and said detector array.

In an example to understand the invention the optical emitter is configured to emit in at least two different wavelengths.

In an example to understand the invention said optical emitter comprises at least two emitters configured to operate in two different wavelengths.

In an embodiment said Lidar comprises a plurality of identical or different emitter-detector modules.

The invention is also achieved by a method of fabrication of a Lidar as described in claims 1-14, comprising the steps a-e:
a) providing a semiconductor substrate and defining a first portion and a second portion said first portion defining a first side of said substrate and said second portion defining a second side of said substrate
b) realizing on or in said semiconductor substrate , over preferably its whole width, a CMOS readout layer as described above;
c) realizing on said CMOS readout layer a buffer layer;
d) realizing on said buffer layer an absorber layer comprising a GeSn alloy as described above, so as to realize said detector;
e) realizing to said second side, on a portion of said absorber layer, at least one semiconductor laser, preferably by semiconductor layer deposition techniques.

An example of fabrication is achieved by another method of fabrication of the Lidar as described above and comprising the steps a, f-i of:
a) providing a semiconductor substrate and defining a first portion and a second portion , said first portion defining a first side of said substrate and said second portion defining a second side of said substrate ;
f) realizing to said first side, on or in said semiconductor substrate 2, at least one semiconductor laser;
i) realizing to said second side, a detector as described above.

In an embodiment said substrate is a silicon (Si) substrate.

In an embodiment said buffer layer is a germanium (Ge) buffer layer.

### Brief description of the drawings

Further details of the invention will appear more clearly upon reading the following description in reference to the appended figures:
- Figure 1a illustrates a view on an emitter-detector module of the Lidar of the invention;
- Figure 1b illustrates an emitter-detector module comprising a light collimation element and a light collection element, the light emitter of the platform emitting a light beam towards a target T;
- Figure 2 illustrates a SWIR detector part of the emitter-detector module comprising a readout wafer comprising a p-i-n diode structure and comprising an avalanche portion, a slightly doped buffer layer and an SWIR absorption layer;
- Figure 3 illustrated an optical readout layer comprising a CMOS layer of the detector part of the emitter-detector platform;
- Figure 4 illustrates another SWIR detector part of the emitter-detector platform comprising a readout wafer comprising a p-i-n diode structure and comprising an avalanche portion, a slightly doped buffer layer, a SWIR absorption layer and a light directing layer;
- Figure 5 illustrates an SWIR detector part of the emitter-detector module comprising an absorbing layer which structure comprises a plurality of rods;
- Figure 6 illustrates an emitter-detector module of the invention comprising an emitter and a detector part fixed on said platform;
- Figure 7 illustrates an emitter-detector module of the invention wherein the detector is arranged on the substrate of the emitter of the platform;
- Figure 8 illustrates an emitter-detector module of the invention wherein emitters are arranged to opposite sides of the detector of said platform;
- Figure 9 illustrates an emitter-detector module of the invention wherein the readout layer of the detector is realized in the substrate of the emitter;
- Figure 10 illustrates an emitter-detector module of the invention wherein the emitter is arranged in a housing, the emitter-detector module comprising a deflection mechanism that allows to rotate said housing;
- Figure 11 illustrates an emitter-detector module of the invention wherein a lens is fixed on a common platform with a flexible structure allowing to rotate said lens;
- Figure 12 illustrates an emitter-detector module comprising flexible structure that allow the emitter and the detector to be oscillated in synchronism and with the same angle relative to an axis;
- Figure 13 illustrates an emitter-detector module comprising mechanism configured so that an emitted light beam may be rotated relative to an axis;
- Figure 14 illustrates an emitter-detector module having an emitter and a detector fixed without movable parts on a common platform;
- Figure 15 illustrates an emitter-detector platform comprising a first optical array to generate light beams generated from predefined light emitters into predefined directions, and a second optical array to direct reflected light beams coming from predefined directions to predefined detector pixels;
- Figure 16 illustrates an emitter-detector platform comprising a light diffuser element situated between an emitter and a light collimation element, and comprising a light barrier between the emitter and the detector;
- Figure 17 illustrates a detector substrate that is the platform of an emitter-detector module;
- Figure 18 illustrates an emitter substrate that is the platform of an emitter-detector module.
- Figure 19 illustrates a Lidar comprising an array of emitter-detector modules, arranged on a common base;
- Figure 20 illustrates a Lidar comprising an array of different emitter-detector modules, arranged on a common base;
- Figure 21 illustrates an embodiment of an emitter-detector platform wherein an emitter is arranged to a common platform to the opposite side of a detector, the common platform comprising a waveguide having an outcoupler situated to the side of the detector.

### Detailed description and embodiments of the invention

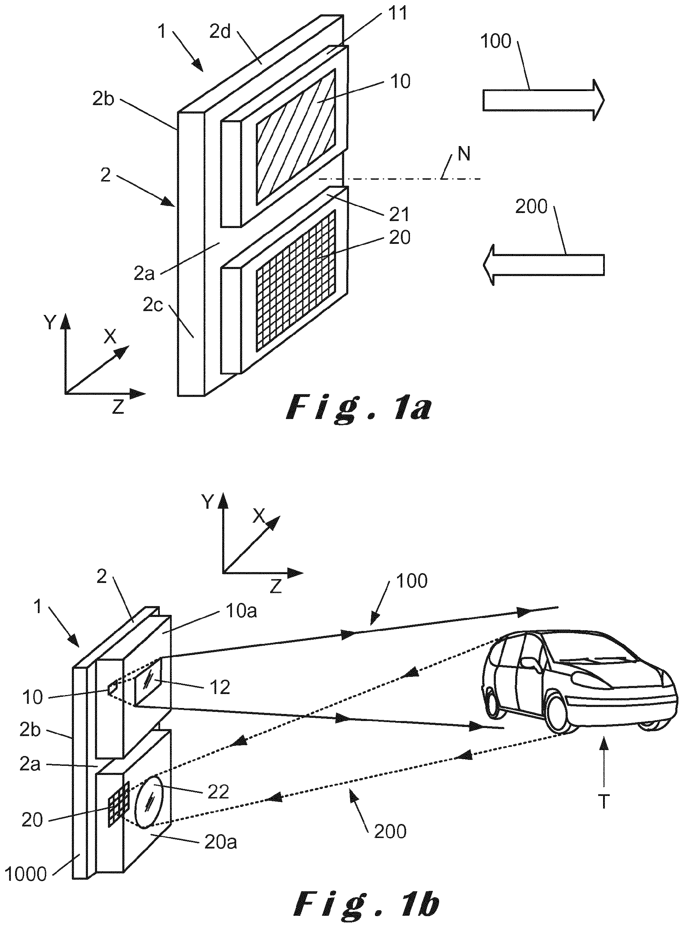

Fig. 1a illustrates an emitter-detector module 1 of a short wavelength infrared (SWIR) light detection and ranging (Lidar) unit of the invention. The emitter-detector module 1 of the Lidar of the invention is a hybrid arrangement comprising a platform 2 on which said optical emitter 10 and said short wavelength infrared detector 20 are arranged. The platform 2 may be a PCB board but is preferably a common substrate made of a semiconductor material as further described in detail. Different embodiments of hybrid and monolithic arrangements of the emitter-detector module 1 are described herein.

The optical emitter 10 of the emitter-detector module 1 of the invention comprises at least one semiconductor laser configured to emit at least one light beam 100 having a wavelength in the short-wave infrared electromagnetic spectrum, defined between 1'000 nm and 3'000 nm. The optical emitter 10 of the Lidar is configured to be operable in a pulsed mode so that, in operation, light pulses having a pulse duration below 5 ns, can be emitted. It is understood that said light pulses may be a train of light pulses or a sequence of trains of light pulses. Said train of light pulses may comprise different light pulses and may be a coded train of light pulses. There is no limitation in the way how said light pulses may be obtained. For example the optical emitter 10 may be a pulsed semiconductor laser or superluminous LED, or a semiconductor laser array of which at least one semiconductor may be pulsed. Also, in variants, different light emitters in an optical emitter may be pulsed in different pulsed modes and generate different light pulses and/or light pulse trains or sequences. The pulsed mode may also be obtained, in the case of a continuous wave (CW) laser, by external means of the optical emitter 10, such as for example realized by electro-optic or electromagnetic obturators. Said external means may be part of said emitter-detector module 1 or may be arranged in said Lidar, in front of said emitter-detector module 1. Different embodiments of the optical emitter 10 of the platform 1 and the emitter-detector module 1 are described further in the present document. Said platform defines a X-Y plane, defined as a module plane, and a normal N to said X-Y plane defines a Z axis, orthogonal to said module plane. Preferably, the substrates and/or layers of said emitter 10 and detector 20 are parallel to said X-Y plane when the Lidar is not in operation, but this is not necessarily so.

The short wavelength infrared Lidar of the invention comprises optical collimation means 12 that are configured to collimate said emitted light beam 100.

Referring to Fig. 1b, an embodiment of the detector 20 of the emitter-detector module 1 is illustrated, configured for detecting, in operation of said Lidar, at least a fraction of an optical reflected beam 200 provided by an at least partial reflection of a target T illuminated by said light beam 100. The short wavelength infrared Lidar of the invention comprises light collection means configured to collect and direct said at least a fraction of an optical reflected beam 200 to said detector 20.

It is understood that said optical collimation means and said light collection means may comprises optical lenses, or mirrors or a combination of lenses and mirrors. Other optical elements such as prisms, diffusers or beam splitters may be arranged in the Lidar of the invention, and may be integrated on the platform of said emitter-detector module 1. In order to realize a uniform light beam 100m, a light diffuser D may be arranged in front of said emitter 10. A light diffuser D may comprise microlens arrays and/or diffractive optical elements or other types of light diffusing components.

Fig. 1b illustrates an advantageous embodiment of a short wavelength infrared (SWIR) light detection and ranging (Lidar) of the invention, comprising said emitter-detector module 1 onto which a collimation optical element 12 and a light collection element 22 is fixed. In the embodiment of Fig. 1b said collimation optical element 12 and a light collection element 22 are part of said emitter-detector module 1. Said emitter-detector module 1 may comprise electronic circuits and data handling and processing units, which are not illustrated in Fig. 1b. The Lidar of the invention may comprise electronic circuits and data processing units that are connected electrically to said emitter-detector module 1. Different variants of electronic circuits and data processing means for Lidars exist and are not further described here.

The Lidar of the invention may comprise a Lidar housing in which said emitter-detector module 1 is arranged. It is understood that the emitter-detector module 1 may include an emitter-detector module 1 housing. Different configurations of the Lidar of the invention are described further herein.

The short wavelength infrared Lidar is configured to be operable to at least a distance of 200 m relative to said optical emitter 10 while guaranteeing eye safety in operation, according to international laser safety standards, such as the IEC/EN 60825-1:2014 and ANSI Z-136, which define the acceptable power and energy limits at all distances relative to said emitter-detector module (1). The short wavelength infrared Lidar allows to obtain a largely improved eye safety compared to Lidars of prior art. One of the reasons for this is the use of a novel detector comprising a GeSn absorber layer which is now described.

### Detector

The detector part of the emitter-detector module 1of the Lidar of the invention, also defined as the detector 20, is now described.

Examples of a detector 20, which is part of the emitter-detector module 1 of the Lidar of the invention, have been proposed by the Applicant in international applications PCT/EP2017/079964 and PCT/EP2018/050785, the content of which is incorporated herein in their entirety.

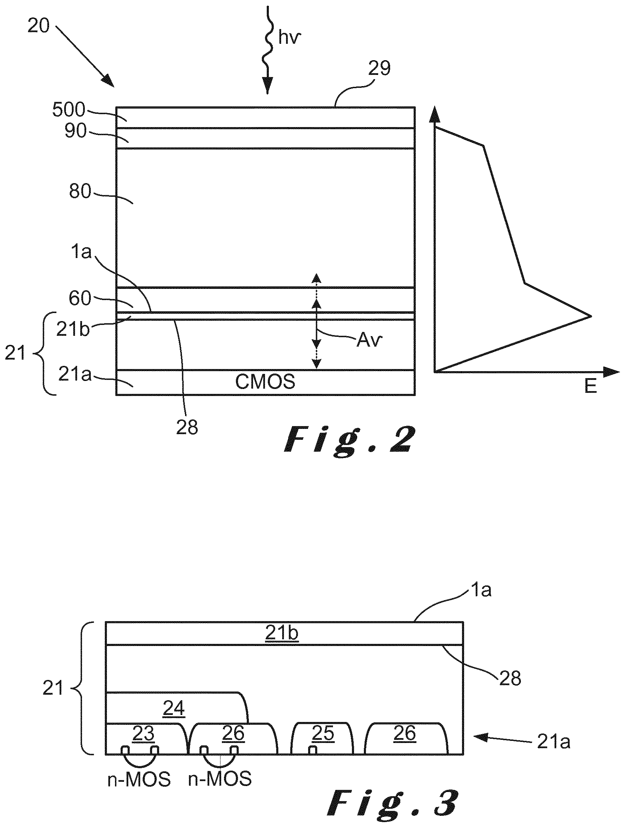

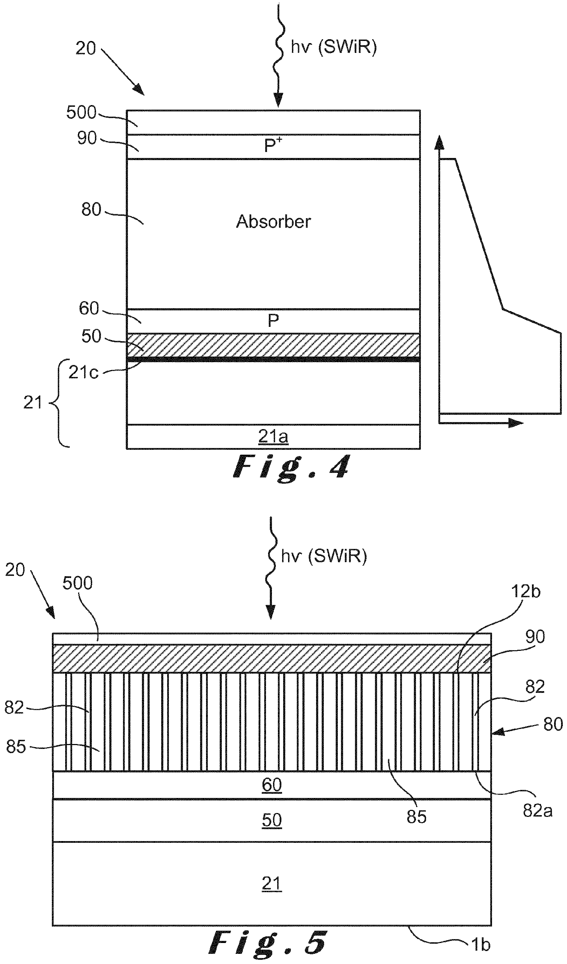

Referring to Figs. 2-5, embodiments are illustrated of said detector 20 comprising a readout wafer 21 comprising a CMOS readout layer 21a, and a SWIR absorbing layer 80 that is separated from said readout layer 21a by a buffer layer 60. The detector array 20 comprises between said buffer layer 60 and said readout layer 21a a p-n junction 21b. As further described, in an embodiment, the back side of the detector 20 , as illustrated in Fig.5 may be the back side 1b of said platform 2.

The detector array 20 may comprise a single avalanche photodiode and may comprise, in embodiments, an array of avalanche photodiodes configured as a multichannel focal plane array, defined as a detector array that is situated in the focal plane of said optical collimation means 12. Fig. 3 shows a single pixel of a detector array 20 arranged on, or integrated in, the platform 2 of the invention. The detector 20 may be configured to operate as a single photon detector or a single photon detector array.

It is essential to the invention that at least the SWIR absorber layer 80 of said detector 20 is made of a GeSn alloy of which several variants are described further. In embodiments said emitter 10 may also comprise a GeSn alloy layer and may be the light emitting layer of said emitter 10, as further described herein.

In a preferred embodiment said absorbing layer 80 is made of Ge₁₋ₓSnₓ.

In variants said absorbing layer 80 has a Sn content x which is higher than 0.03 and lower than 0.12.

In an example to understand the invention said absorbing layer 80 is made of a SiₓGe_{1-x-z}Sn_{z} alloy.

Preferably, the Si content x, in a SiₓGe_{1-x-z}Sn_{z} absorbing layer 80 is higher than 0.06 and lower than 0.2.

In an example to understand the invention of a SiₓGe_{1-x-z}Sn_{z} absorbing layer 80, the Sn content z is higher than 0.02 and lower than 0.1.

In an example to understand the invention said p-n junction 21b is situated at the interface of said buffer layer 60 and said CMOS readout wafer 21.

In an example to understand the invention said p-n junction 21b is situated to the side of said buffer layer 60.

In another embodiment said p-n junction 21b is situated to the side of said readout layer 20.

Advantageously said buffer layer 60 is made of Ge₁₋ₓSnₓ and has a Sn content x between 0.00 ≤ x ≤ 0.03.

In a preferred embodiment said buffer layer 60 is realized by sputter epitaxy.

As an example to understand the invention said buffer layer 60 may be realized by reduced-pressure chemicalvapor deposition.

In an example to understand the invention, the material constituting said absorbing layer 80 is configured as a plurality of rods aligned substantially in a direction perpendicular to said buffer layer 60.

In an advantageous embodiment said absorbing layer 80 is monolithically integrated to a readout wafer comprising said CMOS readout layer 21a and wherein a recrystallized intermediate layer is situated at the interface of said absorber wafer, comprising said absorber layer 80, and said CMOS readout layer 21a.

### Emitter

The light emitter 10 of the Lidar of the invention, which is integrated onto, or into, said platform 1 is a semiconductor light source, preferably a semiconductor laser, which is configured to provide ultra-short light pulses and/or a sequence of light pulses or light trains, which are temporally arranged on the form of predetermined illumination patterns to be projected on a scene or target, defined hereafter as target. Said semiconductor laser is broadly defined herein as a light source having an emission spectrum which spectral width is smaller than 100 nm, smaller than 10 nm, preferably smaller than 2 nm. A semiconductor has to be understood here broadly, in the sense that it may be a single semiconductor laser element or an array of microlasers. Said semiconductor laser may be a superluminous semiconductor emitter. The coherence length of the semiconductor may be any coherence length. In a preferred embodiment the emitter 10 emits in the 1.5 µm wavelengths range providing inherent eye safety.

In embodiments said semiconductor laser 10 is a vertical-cavity surface-emitting laser (VCSEL).

In variants said semiconductor laser may be a vertical-external-cavity surface-emitting laser (VECSEL).

In an embodiment said semiconductor laser comprises a layer made of an alloy of the group IV of the table of the elements, such as a GeSn alloy. Alloying Ge with Sn enables the fabrication of fundamental direct bandgap group IV semiconductors, as well as GeSn light sources grown on Si, such as optically pumped GeSn lasers. Advantageously therefor in embodiments said GeSn alloy layer in said emitter is comprised in the emitting layer of said semiconductor laser. Furthermore, Ge₁₋ₓSnₓ alloys are among a class of semiconductors with tunable bandgaps in the SWIR spectrum, depending on their composition. As the amount of Sn is increased, the band energy decreases and a transition from indirect to direct band structure occurs. Hence, GeSn are suitable for fabrication of Si-compatible light sources, emitters and other photonic devices and components. For example, in embodiments of the invention said platform may be made of Si and said emitter 10 and said detector may be connected by an integrated optical waveguide. For example, a small fraction of the emitted light intensity may be guided to at least one detector of a detector array that is configured as an intensity reference detector, allowing providing an intensity reference of the total emitted light of the Lidar.

Realizing semiconductor laser and detectors based on GeSn alloy allows to integrate them both on Si platforms, as Ge and GeSn alloys may be grown on, for example, a Ge buffer layer on Si, to the contrary of other alloys such as GaAs alloys. This allows realizing hybrid or monolithic emitter-detector platforms comprising a detector 20 and an emitter 10 based on GeSn alloy layers.

In an advantageous embodiment said semiconductor laser 10 is configured to emit a light beam having a wavelength between 1'000 nm and 3'000 nm, preferably between 1'400 nm and 1'700 nm, more preferably between 1'500 nm and 1'600 nm.

### Emitter-detector Module

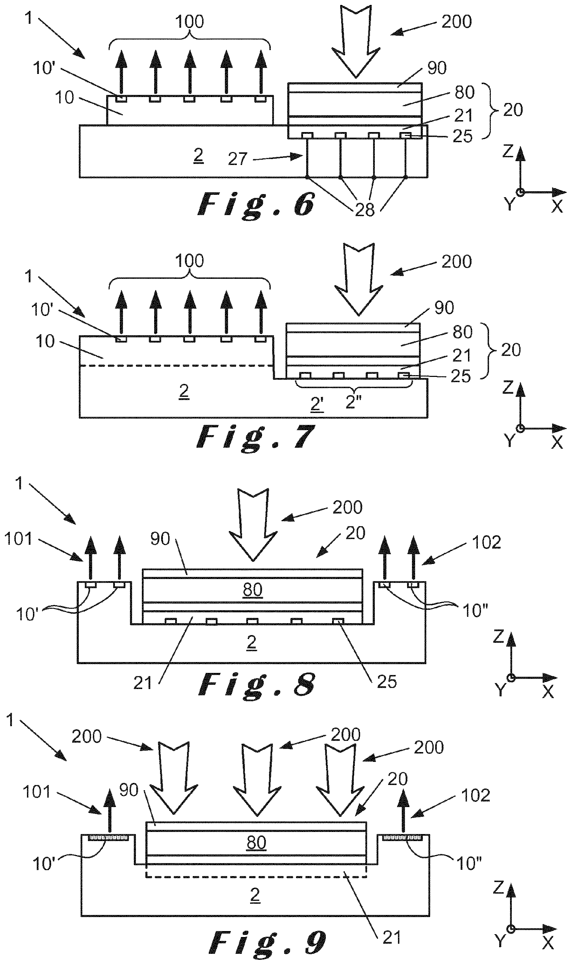

In an advantageous configuration, illustrated in Figs. 6-9, the emitter-detector module 1 comprises a platform 2 comprising a central recess, or alternatively a mesa, in or on which, a SWIR detector 20 may be arranged and so that the emitting surfaces of the emitters and the detection surfaces of the detectors are not situated in the same plane. Furthermore, as illustrated in Fig. 8 at least two emitters 10 may be arranged to the side of the detector 20. In variants, an array of emitters 10 may be arranged around said detector 20.

In an embodiment, illustrated in Fig. 9, the platform 2 is the emitter substrate and said CMOS layer 21 is realized in said emitter substrate.

In embodiments said emitter-detector module 1 comprises electronic processing means to process the information provided by said at least a fraction of the optical reflected beam 200.

Referring to Fig. 6, an emitter-detector module 1 is depicted illustrating a configuration based on a common platform 2 on which the emitter 10 and the detector 10 are attached. Said common platform 2 may be a PCB circuit or a semiconductor platform 2. In an exemplary realization of the embodiment of Fig. 6 the emitter 10 and/or the detector 20 may be integrated to said platform 2 by a bonding process. The bonding process of the emitter 20 may be different than the bonding process of the emitter 10. Said bonding processes may be for example a covalent bonding process, or may also be a bump bonding process or a gluing process. In a variant, illustrated in Fig. 6, feedthroughs 27 may be provided to connect the charge collecting areas 25 to electrical connecting sites situated on the back 2b of said platform 2. The skilled person will know how to provide other electrical conducting tracks on, or inside, said platform 2 such as electrical conducting paths that are connected to said emitter elements 10' so that, for example, as well the emitter 10 and the detector 20 may be connected electrically to electrical contacts 28 provided at the back side 2b of the platform 2. In a variant, electrical connecting paths are realized at or near the surface of the front side 2a of said platform 2. Said electrical connecting paths may be parallel to said front side 2a or integrated in said front side 2a. In variants, electrical connections are provided to at least one of the lateral sides 2c, 2d of said platform 2.

Fig. 7 illustrates an embodiment wherein said platform 2 is the substrate on which the layers of the emitter 10 are realized, for example by a deposition technique. Preferably the substrate is a Si substrate. Preferably the substrate comprises a semiconductor buffer layer chosen among one of the elements of the group IV of the table of elements, preferably the buffer layer is made of Ge or doped Ge.

In an embodiment, the emitter 10 comprises at least one semiconductor laser of which at least one of the layers of the laser layer stack is compatible with a Si substrate such as Ge layer. Advantageously, said emitter 10 is a semiconductor laser comprising a GeSn alloy as the active lasing medium. In the embodiment of Fig. 7 a portion 2' of said substrate 2 defines an area 2" on which the detector 20 may be arranged. The detector 20 may be arranged by bonding techniques, deposition techniques or any other technique such as gluing techniques.

Similar to the embodiment of Fig. 7 the emitter 10 may be arranged on a portion of the substrate of the detector 20.

In an advantageous arrangement, illustrated in Fig. 8, the emitter 10 comprises emitter elements 10', 10" that are arranged to different sides of the detector 20.

In embodiments, said optical emitter 10 and said detector array 30 are integrated monolithically on said platform 20. For example, the microlasers and the detector arrays may both be realized by deposition or bonding techniques and may both comprise a Ge buffer layer arranged on a substrate such as a Si substrate. On said substrate or on said buffer layer, layers made of a GeSn alloy may be arranged by for example deposition techniques. Said layers may comprise for example a first GeSn alloy as the active lasing layer of the emitter 10 and a second GeSn alloy as the absorbing layer 80 of the detector 20.

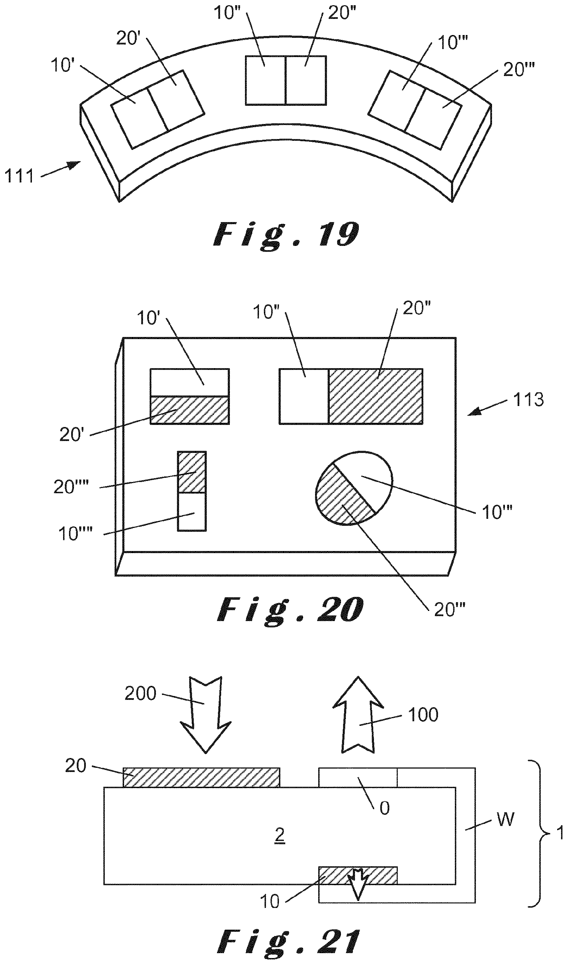

In an advantageous embodiment the light emission side of said optical emitter 10 is situated to the side opposite of said target T relative to said detector 20. In order to direct the emitted light by the emitter 10 in the direction of a target, optical means may be provided to guide the light emitted to the back side 2b of said platform 2 to its front side 2a as illustrated in Fig. 21. Said optical means may be a flexible waveguide or may be at least a waveguide integrated at the surface of said platform 2. In variants, optical coupling means may be provided in or at the surface of said platform 2 to guide emitted light by the emitter 20 to the front side of said platform 2 and so that, in operation of said Lidar, light is directed to said target T. In embodiments, illustrated in Fig. 21, at least one optical waveguide, comprising at least one light outcoupler O, is arranged to said optical emitter 10 so that, in operation, at least one light beam 100 is directed to said target T from said at least one light output surface.

### Lidar

The short wavelength infrared Lidar of the invention comprises light collection means configured to collect and direct said at least a fraction of the optical reflected beam 200 to said detector array 20. In embodiments said light collection means may be a lens 30 or may also be a mirror or a microlens array or a combination of them. In embodiments, the short wavelength infrared Lidar comprises an optical emitter 10 and optical collimation means 12 that are configured to provide an emitted light beam 100 having a vertical aperture between 5-20°, and a horizontal aperture between 45° - 120°. In embodiments the aperture of the emitted light beam 100 is substantially equal to the aperture of said optical collimation means 12.

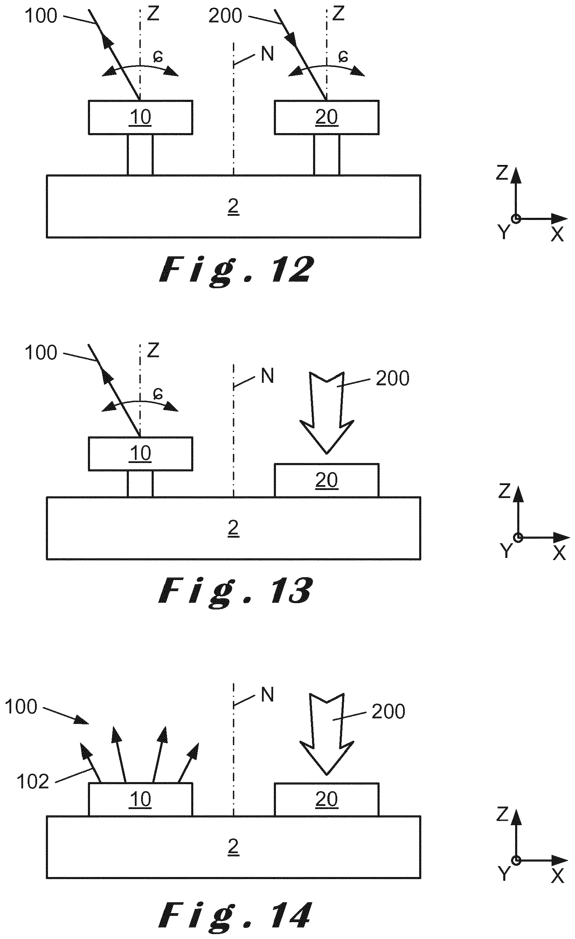

Different Lidar configurations may be provided to direct, in operation, an emitted light beam 100 to a target T and to collect partial reflected light from said target T. These different configurations are illustrated in Figs. 12-16 and are described hereafter.

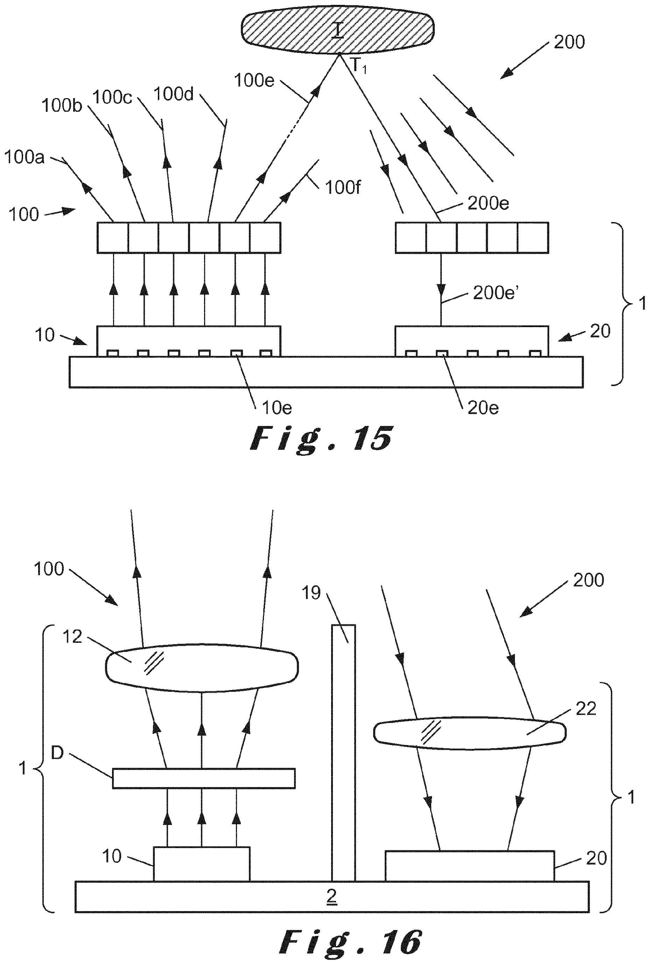

In embodiments, illustrated in Figs. 14-15 said platform 2 does not comprise moving mechanical parts. In embodiments said light collimation means and light collecting means comprise fixed optical elements relative to said emitter 10 and said detector 20. In embodiments said light collimation means comprise optical elements configured to realize a field of view of at least 120° defined in an X-Z plane. Said optical elements may comprise at least one light diffusing optical element D, as illustrated in the embodiment of Fig. 16. In variants the aperture defined in the vertical Y-Z planes is, in at least one Y-Z plane at least 20°, preferably more than 30°.

In an embodiment illustrated in Fig. 15 a first array 11 of optical light deflecting elements is arranged in front of said emitter 10. Said first array 11 is configured to deflect light rays generated from predefined light emitters into separate deflected light beams 100 a-f propagating each in predefined directions. A second array 13 of optical light deflecting elements 13' is arranged in front of said detector array 20 to direct reflected light beams 200 a-f coming from predefined directions to predefined detector pixels. Fig. 15 shows the configuration of an arrangement so that one emitter element 10e is optically connected to a detector element 20e. For exemple, the beam 100e emitted by the emitter element 10e is directed to a portion T1 of a target T and the light portion 200e reflected of said portion is directed to a detector element 20e. By optically connecting predefined emitter elements 10' with at least one predefined detector element 20' it is possible to configure a Lidar that does not comprise moving mechanical parts. Furthermore it is possible to improve the speed and the resolution of the system and it is also possible to handle reflections coming from different depths of a target.

It is understood that in configurations as the one shown in Fig. 15 electronic means may be provided to trigger different selected emitter elements at different times and to trigger selected detector elements so that they detect only light partially reflected by a target illuminated by the light beams emitted by said selected emitter elements. Said selected emitter elements may be defined in a linear array of emitter elements. In variants selected emitter elements may be defined on a curve in the plane of said emitter.

Said light deflecting elements 11, 13 may be realized in different ways. In an embodiment said light deflecting elements 11, 13 are an array of prisms or an array of decentered microlenses relative to the central emission axis of the facing light emitter element or detector element. Said light deflecting elements 11, 13 may comprise the combination of any of: diffractive elements, refractive elements, reflective elements.

In embodiments acousto-optic elements and/or adaptive optical elements may be arranged in any light path of the Lidar.

In variants, the configuration illustrated in Fig. 12 may comprise means configured to rotate and/or to move laterally said emitter 10 and/or or said first array 11 and/or said second array 13 and/or said detector 10, relative to said platform 2.

In an embodiment illustrated in Fig. 16 an emitter-detector platform of the Lidar of the invention may comprise at least one light diffuser element D, preferably situated between the emitter 10 and a light collimation element 12. A diffuser element D may comprise diffractive optical elements and may be configured to provide a virtual light source having a predetermined shape, such as an oval shape. Said diffuser element D may comprise at least one array of microlenses.

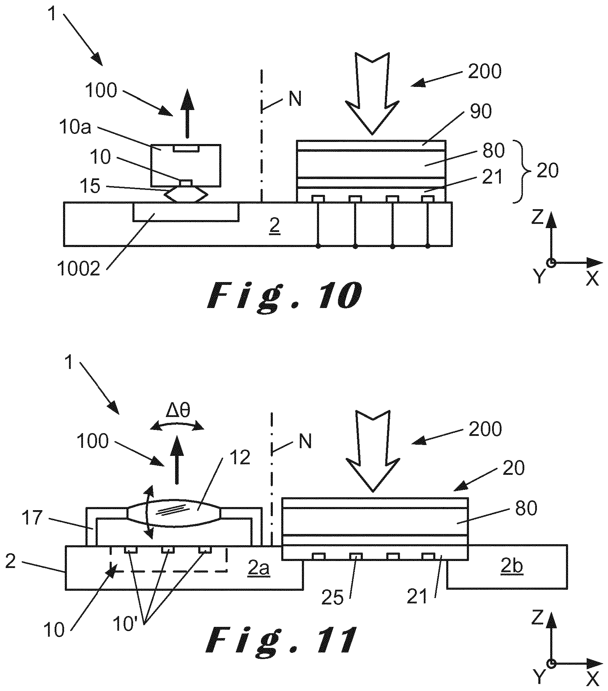

In an embodiment, rotation means are provided to said platform 2 so as to provide, in operation, of the short wavelength infrared Lidar, a scanning movement of said emitted light beam 100. In variants said rotation means may comprise micromachined flexible structures 15, as illustrated in Fig. 10.

In variants, said optical emitter 10 and said optical collimation means are configured in an emitter housing 10a and said micromechanical means may be arranged between said housing 10a and said platform 2.

In variants, said micromechanical means comprises an electromagnetic steering mechanism. In variants said micromechanical means may comprise at least one electrostatic actuator. Said micromechanical means may comprise piezo-electric elements.

In an embodiment said platform 2 comprises optical beam scanning means configured so that the optical axis of said emitted light beam 100 and the optical axis of the partial reflected light beam 200 are always, in operation, substantially parallel.

In an advantageous embodiment said emitter-detector module 1 comprises a light barrier 19 separating optically said optical emitter 10 and said detector array 30. Said light barrier 19 may be micromachined in said platform 2 or may be realized, for example by a deposition or gluing process, on said emitter 10 or detector 20 or said platform 2 during the fabrication process of said emitter-detector platform 2 .

In an embodiment the optical emitter 10 emits in at least two different wavelengths. In variants said optical emitter 10 is an emitter array and comprises at least two emitters 10 configured to operate in two different wavelengths.

It is generally understood that the emitter-detector module 1 may comprise electronic-photonic integrated circuits (EPICs) and may comprise waveguides integrated in or on said platform. There is no limitation on the positioning of the emitter and/or the detector on said platform or inside the Lidar of the invention. For example, Fig.19 illustrates a Lidar comprising support comprising a plurality of emitter-detector modules that may comprise different types of emitters 10', 10", 10" and/or detectors 20', 20", 20'". Said support may have different shapes, for example a curved shape. Fig. 20 illustrates an embodiment of a Lidar comprising different shapes of the emitter and detector, which may be different types of emitters and/or detectors. In variants the Lidar may comprise one detector 20 and a plurality of emitters 10. In variants the Lidar may comprise one emitter 10 and a plurality of detectors 20.

The Lidar of the invention comprises, preferably on said platform 2, more preferably in or on said detector 20, electronic processing means, which apply one or more circuits to handle the detected signals of the detector 10 itself. Said processing means may be embedded onto the same integrated circuit as the one of the detector 20 so that the speed of the data treatments is high and so that data may be provided to an external data link to the detector, preferable external to said platform 2. One of the circuits in said Lidar assures the averaging of detection events received by the diodes of the detector 20 at specific addresses in the detector array. This averaging may be executed by for example a local DSP which may be integrated on said detector 20 or on said platform 2. Averaging performed by local DSPs may be very fast due to the fact that raw data is not transmitted to an external DSP. Said detector may comprise electronic circuits to compress data provided by a local DSP so that the quantity of data transmitted to external processors of the Lidar is reduced. Such processors are known and are not described here. In embodiments maximum resolution is achieved while suing a single APD for each detector pixel. In order to improve depth resolution averaging may be performed on for example 10-20 elements of the detector 20.

In a variant said platform may comprise a principal DSP that processes all the compressed data, perform filtering functions and perform the transfer to a real-time electronic controller. Said principal DSP comprises preferably a memory and a program to run the needed electronic and data handling operations. In variants the Lidar may comprises a plurality of controllers to address a diversity of orders, for example the triggering of the emitter and the detector elements, their possible synchronization, and as well as the addressing of the electronic or mechanical scanning means as described above. In a variant said controller may drive variable focusing means provided in said Lidar, allowing for example to vary the divergence of the emitted light beam 100.

### Method of realization

The invention is also achieved by a method of realization of a monolithic integration of said emitter 10 and said detector on said platform 1.

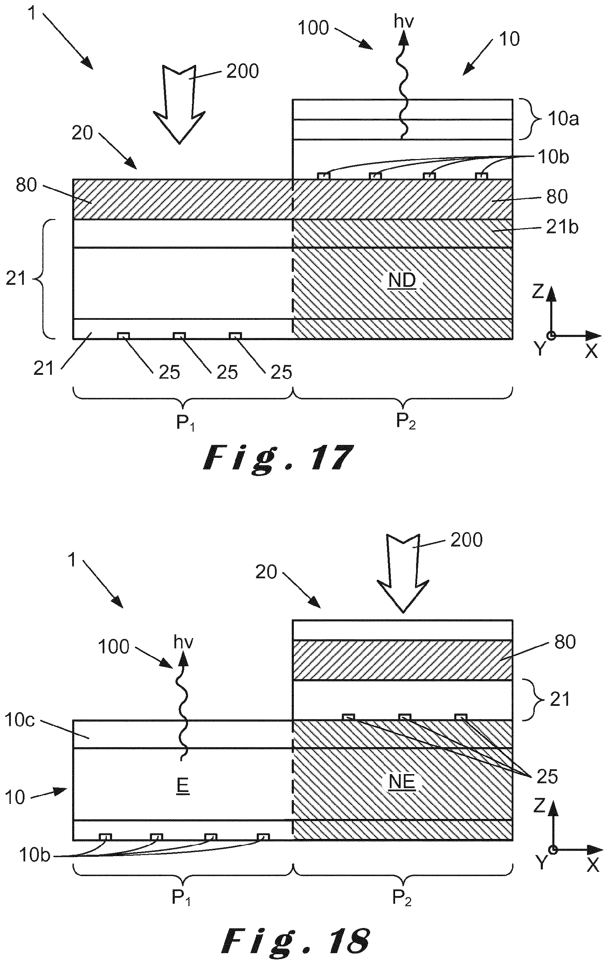

In a preferred embodiment, illustrated in Fig. 17, a detector 20 is first formed on said platform 2, before the emitter 10 is formed on said platform 2. In the embodiment of Fig. 17, said platform 2 is the substrate of the detector 20 and its method of fabrication comprises the following steps a-e:
a) provide a semiconductor substrate 2 and defining a first portion P1 and a second portion P2 said first portion P1 defining a first side of said substrate 2 and said second portion defining a second side of said substrate 2;
b) realizing in said semiconductor substrate 2, over preferable it whole width, a CMOS readout layer 21a as described above;
c) realizing on said CMOS readout layer 21a a buffer layer 60 as described above and not illustrated in Fig. 17;
d) realizing on said buffer layer 60 an absorber layer 80 comprising a GeSn alloy as described above, so as to realize said detector 20. The deposited layers comprise a non-functional layer portion ND that has no function but a mechanical support to deposit the emitter;
e) realizing , as illustrated in Fig. 17, to said second side, and above said layer portion ND, on said absorber layer 80, at least one semiconductor laser 10, preferably by semiconductor layer deposition techniques..

In an example of fabrication, illustrated in Fig. 18, said semiconductor laser 10 is formed on said platform 2 before the detector 20 is formed on said platform 2. In this example said platform 2 is the substrate of said emitter 10 and comprises the steps a, f-i of:
a) provide a semiconductor substrate 2 and defining a first portion P1 and a second portion P2, said first portion P1 defining a first side of said substrate 2 and said second portion P2 defining a second side of said substrate 2;
f) realizing, to said first side, on or in said semiconductor substrate 2, at least one semiconductor laser 10; The deposited layers of the emitter 10 comprise a nonfunctional layer portion NE that has no function but a mechanical support to deposit the detector 20;
i) realizing to said second side, above said non-functional layer portion NE a detector 20 as described above.

It is understood that during the manufacturing of said semiconductor laser, layers are deposited over the whole width of said substrate, as illustrated in Fig. 18. Only the portion to said first side is treated so that a functional laser is realize to said first side of said substrate, the layers to said second side being only suited as support for the deposition of the layers of the detector 10 as illustrated in Fig. 18. For example, to said second side, no electrically semiconductor laser contacts are realized under said detector 10 portion. In variants, by using masking techniques, the deposited layers necessary to realize said emitter 10 may only be doped to said first side, as the portion to said second side does not comprise full semiconductor layer properties, lacking for example the needed doping, which is only realize to said first side. In variants, at least partially formed emitters 10 or detectors 20, may be arranged respectively on said nonfunctional portions ND, NE. Said already formed emitters or detectors may be commercially available devices. More precisely in an embodiment, said step e is replaced by another step i that consists of fixing an already formed semiconductor layer, such as a commercially available semiconductor layer, laser to the side of said second portion. Said already formed microlaser may be a commercial available microlaser comprising or not its housing.

In an example of fabrication, said platform 2 is a silicon (Si) platform, but not necessarily so. Such a Si platform 2 allows realizing directly, by deposition or bonding techniques said detector 20 and/or said emitter 10. Said Si platform may comprise a wide variety of intermediates layers between said emitters and/or said detectors, such as strain relieving layers or layers that isolate the active layers of said emitter 10 and detector 20.

The emitter-detector module may have any lateral dimension, and may be formed for example on a single 4inch wafer. In variants, the emitter-detector module may be realized in a batch process on wafers that have a lateral dimension greater than 4 inch. Said wafers may be diced to provide a plurality of emitter-detector modules 1. In variants said light collecting 22 and collimation elements 12 may be realized in a batch process during the manufacturing of said emitters and/or detectors and/or said emitter-detector modules 1.

In an advantageous variant of said method said emitter 10 is realized on an emitter wafer that is bonded to said platform 2.

In advantageous variants, either said detector 20 or said emitter 10 is realized by bonding respectively an absorber wafer or an emitter wafer on a substrate, for example a Si substrate. In such variants, a portion of said absorber wafer, respectively emitter wafer, is etched away. By etching away said portion, said first portion or said second portion becomes available to fix or deposit the remaining emitter, respectively detector of said emitter-detector platform 1.

For example, in an embodiment of said method, an absorber wafer is bonded to a Si substrate, for example by covalent bonding. The absorber wafer is partially etched so that the surface of a second portion of said substrate presents a free deposition area, allowing to fix on said free deposition area, a commercially available semiconductor laser, or to deposit on said free deposition area the layers of a microlaser.

It is generally understood that the Lidar of the invention may be configured as any type of Lidar configuration, such as a flash-type Lidar, or a scanning Lidar. It is also understood that the Lidar of the invention may comprise an array of different Lidars. For example the Lidar may comprise a common frame comprising at least one flash-type Lidar and at least one scanning type Lidar. In variants, the Lidars of such an array of Lidars may comprise SWIR detectors that have different GeSn compositions of their absorber layer 80.

### Exemplary realization of a Lidar of the invention

In a first example of realization the light emitter is a commercially available semiconductor laser configured to emit a light beam having a wavelength of 1.5 µm, is configured to emit light pulses having a duration of less than 5 ns and emits a peak power of 50 W. Certain light pulses of the semiconductor layer 10 may be transmitted at a frequency compatible with the SPAD recovery time, typically 50MHz. In the example of realization, the detector 20 is a detector array configured as a SPAD detector array and having an absorbing layer 80 made of a GeSn alloy. The detector array 20 in this exemplary realization comprises at least 100'000 detector pixels. In said example the light collection element has a diameter of 30mm and allows achieving a lateral resolution of 10cm at 200m and a depth resolution of 2-3 cm at 200 m.

A second example of realization is identical to said first example of realization but said commercially available semiconductor laser is replaced by is a GeSn based light emitter.

### Exemplary applications

The SWIR Lidar of the present invention may be used in various types of applications such as ground, airborne and space technology for intelligence, surveillance, military or security systems. It may also be used for spectroscopy, machine vision or non-invasive clinical investigations such as optical coherence tomography. More precisely, the SWIR Lidar of the present invention can be integrated into and used in methods of the following fields of applications as described below.

System-level benefits of large FPAs are related to providing a large instantaneous field of view and a fully electronic selection by reading out a region of interest (FOV). Large FPAs allow monitoring of large areas and enable key applications, such as high-resolution, wide-area airborne persistent surveillance. The detector larger format with smaller pixel size helps to solve the unmanned - aerial or terrestrial - vehicle (UV) automated "sense and avoid" problem. By using an array of detectors in a FPA, the mechanical scanning needed in single-detector systems can be avoided and because a photon-counting FPA has the ability to digitally time stamp individual photon arrivals it is an enabler for highly sensitive light detection and ranging imaging systems. In a Lidar system the scene is illuminated by a short laser pulse, and imaged onto the FPA, where each single-photon avalanche diode measures photon arrival time, and therefore depth to the corresponding point in the scene whereas the image is built up by combining multiple frames.

Most minerals contain distinct absorption features in the SWIR, making this region of the spectrum the best candidate for spectroscopic analysis in many applications. Hydroxyl bearing minerals, sulfates, and carbonate materials produced naturally on earth - or directly related to human activities such as the burning of fossil fuels and the deforestation - are easily identified through SWIR spectroscopy. Multi/ hyper-spectral Lidar imaging can thus provide a powerful tool for mapping, archaeology, earth science, glaciology, agricultural assessment and disaster response.

## Claims

1. A short wavelength infrared (SWIR) light detection and ranging (Lidar) unit comprising an emitter-detector module (1) comprising a short wavelength infrared optical emitter (10) and a short wavelength infrared detector (20),
- said emitter-detector module (1) comprising a platform (2) on which said optical emitter (10) and said short wavelength infrared detector (20) are arranged;
- said optical emitter (10) comprising at least one semiconductor laser configured to emit a light beam (100) having a wavelength in the short-wave infrared electromagnetic spectrum, defined between 1'000 nm and 3'000 nm, and configured to be operable in a pulsed mode so that, in operation, light pulses can be emitted,
- said detector (20) being configured for detecting, in operation of said Lidar, at least a fraction of an optical reflected beam (200) provided by an at least partial reflection of a target (1000) illuminated by said light beam (100),
- said short wavelength infrared Lidar being configured to be operable to at least a distance of 200 m relative to said optical emitter (10), being eye-safe at all distances relative to said emitter-detector module (1); **characterized in that**
- said light pulses have a duration below 5 ns;
- said short wavelength infrared Lidar comprising optical collimation means (12), configured to collimate said emitted light beam (100);
- said detector (20) comprising a readout wafer (21) comprising a CMOS readout layer (21a) and a SWIR absorbing layer (80) that is separated from said readout layer (21a) by a buffer layer (60) said detector (20) comprising between said buffer layer and said readout layer (21a) a p-n junction (21b);
- said detector (20) comprises at least one avalanche photodiode;
- said short wavelength infrared Lidar comprises light collection means (30) configured to collect and direct said at least a fraction of the optical reflected beam (200) to said detector (20);
- said detector (20) comprises at least one absorber layer made of a GeSn alloy.

2. The short wavelength infrared Lidar according to claim 1 wherein said absorbing layer (80) has a Sn content x which is higher than 0.03 and lower than 0.12.

3. The short wavelength infrared Lidar according to claim 1 or 2 wherein said p-n junction (21b) is situated to the side of said readout layer (20).

4. The short wavelength infrared Lidar according to any one claims 1 to 3 wherein said buffer layer (60) is made of Ge₁₋ₓSnₓ and having a Sn content x between 0.00 ≤ x ≤ 0.03.

5. The short wavelength infrared Lidar according to any one of claims 1 to 4 wherein said buffer layer (60) is realized by sputter epitaxy.

6. The short wavelength infrared Lidar according to any one of claims 1 to 5 wherein said absorbing layer (80) is monolithically integrated to a readout wafer comprising said CMOS readout layer (21a) and wherein a recrystallized intermediate layer (21b) is situated at the interface of said absorber wafer and said CMOS readout layer (21a).

7. The short wavelength infrared Lidar according to any one of claim 1 to 6 wherein said optical collimation means (12) comprises a microlens array.

8. The short wavelength infrared Lidar according to any one of claims 1 to 7 wherein said optical emitter (10) and said optical collimation means (12) are configured to provide an emitted light beam (100) having a first aperture between 10°-25°, and a second aperture between 25°-120°.

9. The short wavelength infrared Lidar according to any one of claims 1 to 8 wherein said emitter-detector module (1) comprises electronic processing means to process the information provided by said detector (20).

10. The short-wave infrared Lidar according to any of the claims 1 to 9 wherein at least one optical emitter (10) is situated to each side of said detector (20), said side being defined in the plane of said detector (20).

11. The short wavelength infrared Lidar according to any one of claims 1 to 10 wherein micromechanical means are provided to said platform (2) so as to provide, in operation, of the short wavelength infrared Lidar, a scanning movement of said emitted light beam (100).

12. The short wavelength infrared Lidar according to any one of claims 1 to 11 wherein said platform (2) comprises optical beam scanning means configured so that the optical axis of said emitted light beam (100) and the optical axis of said light collecting means are parallel.

13. The short wavelength infrared Lidar according to any one of claims 1 to 12 wherein platform (2) comprises a microstructured light barrier separating optically said optical emitter (10) and said detector (20).

14. The short wavelength infrared Lidar according to any one of claims 1 to 13 wherein said Lidar comprises a plurality of identical or different emitter-detector modules (1).

15. A method of fabrication of a Lidar according to any one of claims 1-14 said comprises the steps a-e:
a) providing a semiconductor substrate (2) and defining a first portion (P1) and a second portion (P2), said first portion (P1) defining a first side of said substrate (2) and said second portion (P2) defining a second side of said substrate (2);
b) realizing on or in said semiconductor substrate 2, over preferably its whole width, the CMOS readout layer (21a);
c) realizing on said CMOS readout layer (21a) the buffer layer (60);
d) realizing on said buffer layer (60) the absorber layer (80) made of the GeSn alloy, so as to realize said detector (20);
e) realizing to said second side, on a portion of said absorber layer (80), at least one semiconductor laser (10), preferably by semiconductor layer deposition techniques.

## Patentansprüche

1. Kurzwellen-Infrarot- (SWIR) -Lichtdetektions- und Entfernungsmess- (Lidar) -Einheit, umfassend ein Emitter-Detektor-Modul (1), das einen optischen Kurzwellen-Infrarot-Emitter (10) und einen Kurzwellen-Infrarot-Detektor (20) umfasst,
- wobei das Emitter-Detektor-Modul (1) eine Plattform (2) umfasst, auf der der optische Emitter (10) und der Kurzwellen-Infrarot-Detektor (20) angeordnet sind;
- wobei der optische Emitter (10) mindestens einen Halbleiterlaser umfasst, der dazu eingerichtet ist, einen Lichtstrahl (100) mit einer Wellenlänge im kurzwelligen infraroten elektromagnetischen Spektrum, definiert zwischen 1 000 nm und 3 000 nm, zu emittieren, und der dazu eingerichtet ist, in einem gepulsten Modus betrieben werden zu können, sodass bei Betrieb Lichtimpulse emittiert werden können,
- wobei der Detektor (20) dazu eingerichtet ist, bei Betrieb des Lidar mindestens einen Teil eines reflektierten optischen Strahls (200) zu detektieren, der durch eine zumindest teilweise Reflexion von einem Zielobjekt (1000) bereitgestellt wird, das von dem Lichtstrahl (100) angestrahlt wird,
- wobei das Kurzwellen-Infrarot-Lidar dazu eingerichtet ist, auf zumindest einer Entfernung von 200 m zum optischen Emitter (10) betriebsfähig zu sein, wobei es in allen Entfernungen zum Emitter-Detektor-Modul (1) augensicher ist; **dadurch gekennzeichnet, dass**
- die Lichtimpulse eine Dauer von weniger als 5 ns haben;
- das Kurzwellen-Infrarot-Lidar optische Kollimationsmittel (12) umfasst, die dazu eingerichtet sind, den emittierten Lichtstrahl (100) zu kollimieren;
- der Detektor (20) einen Auslesewafer (21) umfasst, der eine CMOS-Ausleseschicht (21a) und eine SWIR-absorbierende Schicht (80), die von der Ausleseschicht (21a) durch eine Pufferschicht (60) getrennt ist, umfasst, wobei der Detektor (20) zwischen der Pufferschicht und der Ausleseschicht (21a) einen p-n-Übergang (21b) umfasst;
- der Detektor (20) mindestens eine Avalanche-Fotodiode umfasst;
- das Kurzwellen-Infrarot-Lidar eine Lichtsammeleinrichtung (30) umfasst, die dazu eingerichtet ist, den mindestens einen Teil des reflektierten optischen Strahls (200) zu sammeln und zum Detektor (20) zu leiten;
- der Detektor (20) mindestens eine Absorberschicht umfasst, die aus einer GeSn-Legierung besteht.

2. Kurzwellen-Infrarot-Lidar nach Anspruch 1, wobei die absorbierende Schicht (80) einen Sn-Gehalt x hat, der größer als 0,03 und geringer als 0,12 ist.

3. Kurzwellen-Infrarot-Lidar nach Anspruch 1 oder 2, wobei der p-n-Übergang (21b) zur Seite der Ausleseschicht (21a gerichtet ist.

4. Kurzwellen-Infrarot-Lidar nach einem der Ansprüche 1 bis 3, wobei die Pufferschicht (60) aus Ge₁₋ₓSnₓ besteht und einen Sn-Gehalt x von 0,00 ≤ x ≤ 0,03 hat.

5. Kurzwellen-Infrarot-Lidar nach einem der Ansprüche 1 bis 4, wobei die Pufferschicht (60) durch Sputter-Epitaxie ausgebildet ist.

6. Kurzwellen-Infrarot-Lidar nach einem der Ansprüche 1 bis 5, wobei die absorbierende Schicht (80) monolithisch in einen Auslesewafer integriert ist, der die CMOS-Ausleseschicht (21a) umfasst, und wobei sich eine rekristallisierte Zwischenschicht (21b) an der Grenzfläche des Absorberwafers und der CMOS-Ausleseschicht (21a) befindet.

7. Kurzwellen-Infrarot-Lidar nach einem der Ansprüche 1 bis 6, wobei die optischen Kollimationsmittel (12) ein Mikrolinsen-Array umfassen.

8. Kurzwellen-Infrarot-Lidar nach einem der Ansprüche 1 bis 7, wobei der optische Emitter (10) und die optischen Kollimationsmittel (12) dazu eingerichtet sind, einen emittierten Lichtstrahl (100) mit einer ersten Öffnung zwischen 10° und 25° und einer zweiten Öffnung zwischen 25° und 120° bereitzustellen.

9. Kurzwellen-Infrarot-Lidar nach einem der Ansprüche 1 bis 8, wobei das Emitter-Detektor-Modul (1) eine elektronische Verarbeitungseinrichtung zum Verarbeiten der von dem Detektor (20) bereitgestellten Informationen umfasst.

10. Kurzwellen-Infrarot-Lidar nach einem der Ansprüche 1 bis 9, wobei mindestens ein optischer Emitter (10) zu jeder Seite des Detektors (20) gerichtet ist, wobei die Seite in der Ebene des Detektors (20) definiert ist.

11. Kurzwellen-Infrarot-Lidar nach einem der Ansprüche 1 bis 10, wobei die Plattform (2) mit mikromechanischen Mitteln versehen ist, um bei Betrieb des Kurzwellen-Infrarot-Lidar für eine Abtastbewegung des emittierten Lichtstrahls (100) zu sorgen.

12. Kurzwellen-Infrarot-Lidar nach einem der Ansprüche 1 bis 11, wobei die Plattform (2) optische Strahlabtastmittel umfasst, die derart gestaltet sind, dass die optische Achse des emittierten Lichtstrahls (100) und die optische Achse der Lichtsammeleinrichtung parallel sind.

13. Kurzwellen-Infrarot-Lidar nach einem der Ansprüche 1 bis 12, wobei die Plattform (2) eine mikrostrukturierte Lichtbarriere umfasst, die den optischen Emitter (10) und den Detektor (20) optisch trennt.

14. Kurzwellen-Infrarot-Lidar nach einem der Ansprüche 1 bis 13, wobei das Lidar eine Vielzahl von identischen oder unterschiedlichen Emitter-Detektor-Modulen (1) umfasst.

15. Verfahren zur Herstellung eines Lidar nach einem der Ansprüche 1 bis 14, wobei das Verfahren die Schritte a bis e umfasst:
a) Bereitstellen eines Halbleitersubstrats (2) und Definieren eines ersten Abschnitts (P1) und eines zweiten Abschnitts (P2), wobei der erste Abschnitt (P1) eine erste Seite des Substrats (2) definiert und der zweite Abschnitt (P2) eine zweite Seite des Substrats (2) definiert;
b) Ausbilden der CMOS-Ausleseschicht (21a) auf oder in dem Halbleitersubstrat 2, vorzugsweise über seiner ganzen Breite;
c) Ausbilden der Pufferschicht (60) auf der CMOS-Ausleseschicht (21a);
d) Ausbilden der aus der GeSn-Legierung bestehenden Absorberschicht (80) auf der Pufferschicht (60), um den Detektor (20) auszubilden;
e) Ausbilden auf einem Abschnitt der Absorberschicht (80) zu der zweiten Seite mindestens eines Halbleiterlasers (10), vorzugsweise durch Halbleiterschicht-Depositionstechniken.

## Revendications

1. Unité de détection de lumière infrarouge à courte longueur d'onde (SWIR) et de télémétrie (Lidar) comprenant un module émetteur-détecteur (1) comprenant un émetteur optique infrarouge à courte longueur d'onde (10) et un détecteur infrarouge à courte longueur d'onde (20),
- ledit module émetteur-détecteur (1) comprenant une plateforme (2) sur laquelle sont agencés ledit émetteur optique (10) et ledit détecteur infrarouge à courte longueur d'onde (20) ;
- ledit émetteur optique (10) comprenant au moins un laser à semi-conducteur conçu pour émettre un faisceau lumineux (100) présentant une longueur d'onde dans le spectre électromagnétique infrarouge à onde courte, défini entre 1000 nm et 3000 nm et conçu pour être utilisable dans un mode pulsé de telle sorte que, lors du fonctionnement, des impulsions lumineuses peuvent être émises,
- ledit détecteur (20) étant conçu pour détecter, lors du fonctionnement dudit Lidar, au moins une fraction d'un faisceau optique réfléchi (200) fourni par une réflexion au moins partielle d'une cible (1000) éclairée par ledit faisceau lumineux (100),
- ledit Lidar infrarouge à courte longueur d'onde étant conçu pour être utilisable à au moins une distance de 200 m par rapport audit émetteur optique (10), sans danger pour l'œil à toutes les distances par rapport audit module émetteur-détecteur (1) ;
**caractérisé en ce que**
- lesdites impulsions lumineuses ont une durée inférieure à 5 ns ;
- ledit lidar infrarouge à courte longueur d'onde comprenant des moyens de collimation optique (12), conçus pour collimater ledit faisceau lumineux émis (100) ;
- ledit détecteur (20) comprenant une tranche de lecture (21) comprenant une couche de lecture CMOS (21a) et une couche absorbante SWIR (80) qui est séparée de ladite couche de lecture (21a) par une couche tampon (60), ledit détecteur (20) comprenant une jonction p-n (21b) entre ladite couche tampon et ladite couche de lecture (21a) ;
- ledit détecteur (20) comprend au moins une photodiode à avalanche ;
- ledit Lidar infrarouge à courte longueur d'onde comprend des moyens de collecte de lumière (30) conçus pour collecter et diriger ladite au moins une fraction du faisceau optique réfléchi (200) vers ledit détecteur (20) ;
- ledit détecteur (20) comprend au moins une couche absorbante constituée d'un alliage GeSn.

2. Lidar infrarouge à courte longueur d'onde selon la revendication 1, ladite couche absorbante (80) présentant une teneur x en Sn qui est supérieure à 0,03 et inférieure à 0,12.

3. Lidar infrarouge à courte longueur d'onde selon la revendication 1 ou 2, ladite jonction p-n (21b) étant située sur le côté de ladite couche de lecture (21a).

4. Lidar infrarouge à courte longueur d'onde selon l'une quelconque des revendications 1 à 3, ladite couche tampon (60) étant constituée de Ge₁₋ₓSnₓ et présentant une teneur x en Sn entre 0,00 ≤ x ≤ 0,03.

5. Lidar infrarouge à courte longueur d'onde selon l'une quelconque des revendications 1 à 4, ladite couche tampon (60) étant réalisée par épitaxie par pulvérisation.

6. Lidar infrarouge à courte longueur d'onde selon l'une quelconque des revendications 1 à 5, ladite couche absorbante (80) étant intégrée de manière monolithique à une tranche de lecture comprenant ladite couche de lecture CMOS (21a) et une couche intermédiaire recristallisée (21b) étant située à l'interface de ladite tranche absorbante et de ladite couche de lecture CMOS (21a).

7. Lidar infrarouge à courte longueur d'onde selon l'une quelconque des revendications 1 à 6, lesdits moyens de collimation optique (12) comprenant un réseau de microlentilles.

8. Lidar infrarouge à courte longueur d'onde selon l'une quelconque des revendications 1 à 7, ledit émetteur optique (10) et lesdits moyens de collimation optique (12) étant conçus pour fournir un faisceau lumineux émis (100) présentant une première ouverture entre 10°-25°, et une seconde ouverture entre 25°-120°.

9. Lidar infrarouge à courte longueur d'onde selon l'une quelconque des revendications 1 à 8, ledit module émetteur-détecteur (1) comprenant des moyens de traitement électronique pour traiter les informations fournies par ledit détecteur (20).

10. Lidar infrarouge à courte longueur d'onde selon l'une quelconque des revendications 1 à 9, au moins un émetteur optique (10) étant situé de chaque côté dudit détecteur (20), ledit côté étant défini dans le plan dudit détecteur (20).

11. Lidar infrarouge à courte longueur d'onde selon l'une quelconque des revendications 1 à 10, des moyens micromécaniques étant fournis à ladite plateforme (2) de façon à fournir un mouvement de balayage dudit faisceau lumineux émis (100) lors du fonctionnement du Lidar infrarouge à courte longueur d'onde.

12. Lidar infrarouge à courte longueur d'onde selon l'une quelconque des revendications 1 à 11, ladite plateforme (2) comprenant des moyens de balayage de faisceau optique conçus de telle sorte que l'axe optique dudit faisceau lumineux émis (100) et l'axe optique desdits moyens de collecte de lumière sont parallèles.

13. Lidar infrarouge à courte longueur d'onde selon l'une quelconque des revendications 1 à 12, la plateforme (2) comprenant une barrière de lumière microstructurée séparant optiquement ledit émetteur optique (10) et ledit détecteur (20) .

14. Lidar infrarouge à courte longueur d'onde selon l'une quelconque des revendications 1 à 13, ledit Lidar comprenant une pluralité de modules émetteurs-détecteurs identiques ou différents (1).

15. Procédé de fabrication d'un Lidar selon l'une quelconque des revendications 1 à 14, ledit procédé comprenant les étapes a-e :
a) fourniture d'un substrat semi-conducteur (2) et définition d'une première partie (P1) et d'une seconde partie (P2), ladite première partie (P1) définissant un premier côté dudit substrat (2) et ladite seconde partie (P2) définissant un second côté dudit substrat (2) ;
b) réalisation, sur ou dans ledit substrat semi-conducteur 2, sur de préférence toute sa largeur, de la couche de lecture CMOS (21a) ;
c) réalisation, sur ladite couche de lecture CMOS (21a), de la couche tampon (60) ;
d) réalisation, sur ladite couche tampon (60), de la couche absorbante (80) constituée de l'alliage GeSn, de manière à réaliser ledit détecteur (20) ;
e) réalisation, sur ledit second côté, sur une partie de ladite couche absorbante (80), d'au moins un laser à semi-conducteur (10), de préférence par des techniques de dépôt de couche semi-conductrice.
